# EUROPÄISCHE PATENTSCHRIFT

(11) **EP 0 429 606 B1**
(45) Veröffentlichungstag und Bekanntmachung des Hinweises auf die Patenterteilung: **15.09.1993**
(21) Anmeldenummer: 90908916.1
(22) Anmeldetag: 12.06.1990
(51) Int. Cl.: B21F 27/10, B23K 11/00

(54) **VERFAHREN UND MASCHINE ZUM HERSTELLEN VON DRAHTGITTERN**
PROCESS AND MACHINE FOR MAKING WIRE GRIDS
PROCEDE ET MACHINE DE FABRICATION DE GRILLES EN FILS DE FER

(30) Priorität: 22.06.1989 AT 1540/89
(43) Veröffentlichungstag der Anmeldung: 05.06.1991
(73) Patentinhaber: EVG Entwicklungs- u. Verwertungs- Gesellschaft m.b.H., A-8042 Raaba (AT)
(72) Erfinder: RITTER, Klaus, A-8042 Graz (AT); RITTER, Gerhard, A-8043 Graz (AT); SCHMIDT, Gerhard, A-8042 Graz (AT); KÖGL, Fred, A-8010 Graz (AT)
(74) Vertreter: Holzer, Walter, Dipl.-Ing.
(86) Internationale Anmeldenummer: AT9000060
(87) Internationale Veröffentlichungsnummer: WO9015677

(56) Entgegenhaltungen:
- US-A- 2 000 788
- US-A- 2 004 409
- US-A- 2 628 642
- US-A- 2 633 877
- US-A- 3 546 771

## Beschreibung

Die Erfindung betrifft ein Verfahren zum Herstellen von Drahtgittern, insbesondere Ziergittern für Zäune u.dgl., bei dem Drähte nach einem Richt- und Spannvorgang kontinuierlich mit vorbestimmter Amplitude um eine fiktive Längsachse hin und her sowie übereinander gebogen und an ihren Kreuzungspunkten miteinander zu einem Drahtband verschweißt werden, worauf zwei oder mehr auf diese Weise gebildete benachbarte Drahtbänder im Bereich der geformten Drahtscheitel zur Überlappung oder Berührung gebracht und in diesem Bereich miteinander verschweißt werden. Gegenstand der Erfindung ist ferner eine Maschine zur Durchführung des Verfahrens.

Zum Herstellen von geschweißten Drahtgittern aus um eine fiktive Längsachse hin- und hergebogenen Drähten ist es aus der US-PS 3,324.900 bekannt, einer Schweißvorrichtung mehrere Drähte mittels einer endlosen umlaufenden Kette zuzuführen, deren aufeinanderfolgende querverlaufende Kettenglieder mit gegeneinander versetzten Dornen ausgestattet sind, um welche die Drähte mittels in der Querrichtung hin- und herbeweglicher Führungsstangen herumgebogen werden. Die einander mit ihren Scheiteln überlappenden Drähte durchlaufen sodann ein Paar von zusammenwirkenden Schweißrollen, mit deren Hilfe die Drähte im Überlappungsbereich verschweißt werden.

Die bekannte Konstruktion hat den Nachteil, daß sie konstruktiv aufwendig ist und in Produktionsrichtung relativ viel Raum beansprucht. Überdies ergibt sich in der Praxis das Problem, daß eine genaue Position der Drahtkreuzungspunkte wegen der beim Vorschub der gebogenen Drähte unvermeidlichen Lageabweichungen und damit eine Dimensionsstabilität des fertig verschweißten Gitters nicht einzuhalten ist. Derartige Dimensionsungenauigkeiten können bei der bekannten Herstellungsweise zu einem späteren Zeitpunkt nicht mehr ausgeglichen werden, so daß unvollkommene Gitter erzeugt werden.

Aus der US-PS 2 633 877 sind ein Verfahren der einleitend angegebenen Art und eine Vorrichtung zur Durchführung desselben bekannt, mit denen Drahtgitter hergestellt werden, die als sogenannter Putzträger Verwendung finden können. Mit Hilfe je eines oberen Zahnradsatzes wird jeweils ein Drahtpaar wellenförmig gebogen und einem Transporttisch zugeführt, an dessen Einlaufseite eine Walze zum Niederhalten der Drähte vorgesehen ist. Die Zahnradsätze sind derart angeordnet, daß sowohl die gebogenen Drahtscheitel innerhalb eines Drahtpaares als auch die jeweils benachbarten Drahtscheitel der beiden Drahtpaare zur Überlappung gebracht werden können. Mit Hilfe von Magnetführungen wird die Überlappung der Drahtscheitel innerhalb eines Drahtpaares erzeugt. Weiterhin ist ein endloses, die überlappende Lage der Drähte gewährleistendes Magnetband vorgesehen, das die Drahtpaare einer Schweißeinrichtung zuführt, in welcher die beiden Drähte jedes Drahtpaares im Überlappungsbereich miteinander verschweißt werden. Ein zusätzliches Zahnrad gewährleistet außerdem die Überlappung beim Übergang vom Transporttisch zum Magnetband.

Nachteilig ist bei der vorstehend geschilderten Vorgangsweise, daß die gebogenen Einzeldrähte je Drahtpaar erst in einer nachfolgenden, durch die Magnetführung gebildeten Vorrichtung übereinander gelegt und anschließend nur kraftschlüssig mittels des Magnetbandes gehalten in die Schweißeinrichtung gefördert werden. Durch diese Vorgangsweise sind Verschiebungen und Lageabweichungen der Drahtkreuzungspunkte unvermeidlich, so daß eine Dimensionsstabilität des fertig verschweißten Drahtgitters nicht eingehalten werden kann.

Die Erfindung zielt darauf ab, diese Nachteile zu vermeiden und ein Verfahren sowie eine zu dessen Durchführung bestimmte Maschine zu schaffen, welche die Herstellung von dimensionsgenauen Drahtgittern mit exakt positionierten Schweißstellen ermöglichen. Das erfindungsgemäße Verfahren der einleitend angegebenen Art zeichnet sich dadurch aus, daß zunächst jeweils nur zwei Drähte, unmittelbar nachdem sie verformt und übereinander gebogen worden sind, formschlüssig gehalten und zum Drahtband verschweißt werden, und daß nach dem Verschweißen der Drahtbänder das fertige Drahtgitter aufgerollt wird.

Durch das formschlüssige Halten der Drähte beim Verschweißen werden dimensionsstabile Drahtbänder und damit Drahtgitter mit genau positionierten Schweißstellen und Maschengrößen erzielt.

Vorzugsweise werden die Maschen jedes aus zwei miteinander verschweißten Drähten gebildeten Drahtbandes vor dem Verschweißen mit einem benachbarten Drahtband in Produktionsrichtung gestreckt oder gestaucht. Hiedurch wird vor dem Verschweißen der Drähte eine exakte Maschengröße und -form festgelegt.

Die zur Durchführung des Verfahrens bestimmte Maschine mit einer Vorrichtung zum Richten und Spannen der von einem Drahtvorrat abgezogenen Drähte, einer quer zur Produktionsrichtung hin- und herbewegbaren Vorrichtung zum Übereinanderbiegen der Drähte um Biegedorne einer umlaufenden Biegevorrichtung, einer dieser zugeordneten Vorrichtung zum Verschweißen der Drähte, die aus einer im wesentlichen zylindrischen Schweißtrommel als Unterelektrode und einer außerhalb derselben angeordneten Oberelektrode besteht, sowie zugeordneten Antriebs- und Steuervorrichtungen, hat erfindungsgemäß die Merkmale, daß die Biegevorrichtung als Teil der Schweißtrommel ausgebildet ist, die kontinuierlich umlaufend antreibbar ist, daß zumindest ein Paar von Biege- und Schweißtrommeln vorgesehen ist, die achsparallel übereinander sowie in Achsrichtung gegeneinander versetzt angeordnet sind und jeweils an ihrem Umfang mehrere, aus zwei gegeneinander elektrisch isolierten Hälften gebildete Biegedorne tragen, die in Umfangsrichtung gegenseitigen Abstand haben und zwischen denen Kreuzungsbereiche für jeweils zwei Drähte liegen, die von der zugeordneten, eine Führungskulisse aufweisenden Vorrichtung zum Übereinanderbiegen der Drähte formschlüssig um die Biegedorne herum legbar und an diesen mittels eines Niederhalters in Anlage haltbar sind, daß jede Biege- und Schweißtrommel im Kreuzungsbereich der Drähte jeweils zwischen benachbarten Biegedornen als Unterelektrode ausgebildet ist und die zugeordnete Oberelektrode in den Kreuzungsbereich zwischen die benachbarten Biegedorne bewegbar ist, daß im Abzugsbereich jeder Biege- und Schweißtrommel eine in die Maschen des verschweißten Drahtbandes eingreifende Abziehvorrichtung und zwischen dieser und der Biege- und Schweißtrommel eine zustellbare Vorrichtung zum Spannen des Drahtbandes angeordnet ist, und daß der Abziehvorrichtung eine Vorrichtung, mit welcher die benachbarten Drahtbänder im Scheitel zur Überlappung oder Berührung gebracht werden, und eine Vorrichtung zum Verschweißen der Drahtbänder im Scheitelbereich derselben zu einem Drahtgitter nachgeschaltet sind.

Gemäß einem bevorzugten Ausführungsbeispiel der Erfindung sind jeder Biege- und Schweißtrommel zwei Vorrichtungen zum Auflegen der Drähte auf die Trommel und zum Biegen der Drähte um die aufeinanderfolgenden Biegedorne zugeordnet, wobei diese Vorrichtungen je einen im wesentlichen in Achsrichtung der Trommel hin- und herbewegbaren, die Drähte mittels Bolzen führenden Schwingbalken sowie die Führungskulisse aufweisen, die ortsfest ist und mit welcher jeder Draht beim Biegevorgang in Anlage am Schwingbalkenbolzen gehalten ist.

Nach einem weiteren Merkmal der Erfindung ist die Oberelektrode von einem Elektrodenhalter getragen, der über eine flexible Stromzuführung mit einem stationären Transformator verbunden und am Ende einer Elektrodenschwinge schwenkbar gelagert ist, die mit ihrem anderen Ende koaxial zur Biege- und Schweißtrommel schwenkbar gelagert und mittels einer Antriebsvorrichtung in eine die Oberelektrode mit der Unterelektrode in Eingriff versetzende Stellung bewegbar, über eine vorbestimmte Schweißstrecke der Trommel mitbewegbar und sodann zurückstellbar ist, wobei der Elektrodenhalter über eine zugeordnete Andrückvorrichtung mit Schweißdruck beaufschlagbar ist.

Zweckmäßig sind mehrere Paare von zueinander versetzten Biege- und Schweißtrommeln nebeneinander auf parallelen Antriebswellen angeordnet, wobei vorzugsweise die Unterelektroden benachbarter Biege- und Schweißtrommeln zur Durchführung einer Doppelpunktschweißung paarweise zu einer Strombrücke elektrisch verbunden sind.

Eine andere bevorzugte Ausführungsform der Erfindung zeichnet sich dadurch aus, daß die Abziehvorrichtung jeder Biege- und Schweißtrommel durch am Umfang eines rotierenden Trägers vorgesehene, an den Kreuzungspunkten des Drahtbandes angreifende Mitnehmer gebildet ist, wobei der Träger vorzugsweise geteilt ausgebildet ist und die Mitnehmer durch zum Stauchen des Drahtbandes gegeneinander verstellbare Zähne gebildet sind.

Den benachbarten Drahtband-Abziehvorrichtungen kann in Produktionsrichtung je eine Transportvorrichtung für das zugeordnete Drahtband nachgeschaltet sein, wobei die Transportvorrichtungen gemeinsam antreibbar und zum Zuführen der Drahtbänder unter gegenseitiger Überlappung oder Berührung derselben zu einer Schweißvorrichtung zum Verschweißen der Drahtbänder bestimmt sind.

Vorteilhaft läuft die zum Verschweißen der Drahtbänder bestimmte Schweißvorrichtung mit den Transportvorrichtungen für die Drahtbänder über eine vorbestimmte Schweißstrecke mit und ist zur Durchführung einer Doppelpunktschweißung ausgebildet, wobei vorzugsweise zum gleichzeitigen Verschweißen von zwei Kreuzungspunkten in jedem Scheitelbereich zu beiden Seiten der Schweißebene zwei elektrisch miteinander verbundene Elektroden vorgesehen sind, zwischen denen ein in den Scheitelbereich eingreifender Zentrierstift angeordnet ist.

Weitere Merkmale der Erfindung werden nachfolgend an einem Ausführungsbeispiel unter Bezugnahme auf die Zeichnungen näher erläutert. Es zeigen:
Fig. 1 einen schematischen Längsschnitt der Maschine gemäß der Erfindung;
Fig. 2a die einlaufseitige Ansicht einer erfindungsgemäßen Schweißmaschine entsprechend der Linie 2a-2a in Fig. 1;
Fig. 2b eine Ansicht der Schweißvorrichtung nach der Linie 2b-2b in Fig. 1;
Fig. 3a in einer Seitenansicht schematisch die Antriebsvorrichtung für die Schweißelektroden zum Verschweißen der Einzeldrähte zu einem Drahtband;
Fig. 3b eine diesbezügliche, einlaufseitige Teilansicht und
Fig. 3c eine weitere Teilansicht;
Fig. 4 schematisch das Auflegen und Biegen der Drähte auf die Biege- und Schweißtrommel gemäß der Erfindung, und
Fig. 5 schematisch den Biege- und Schweißvorgang der Drähte sowie der Drahtbänder.

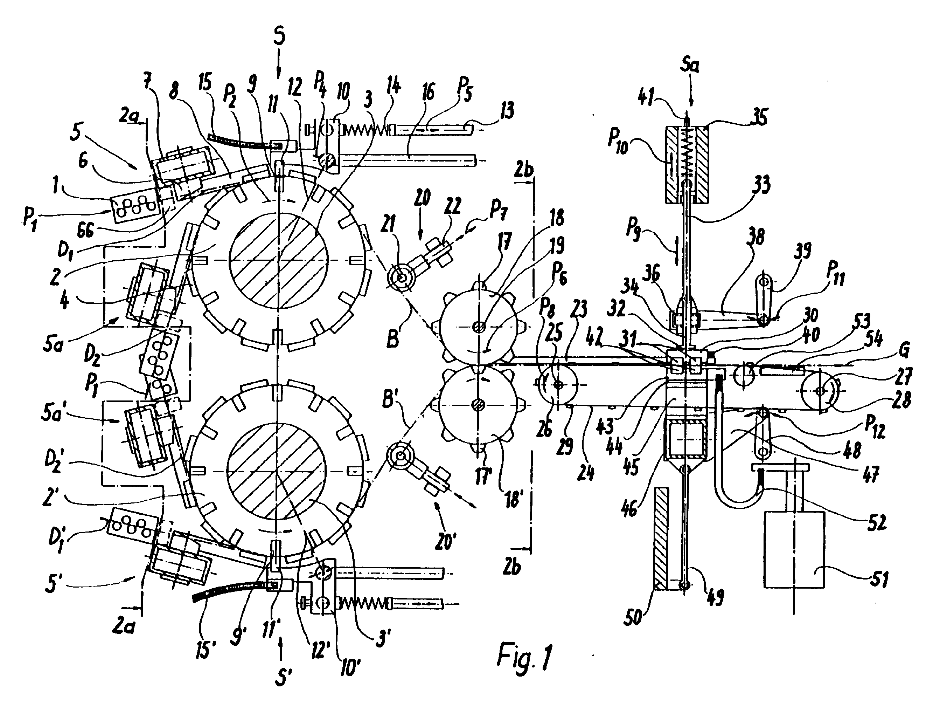

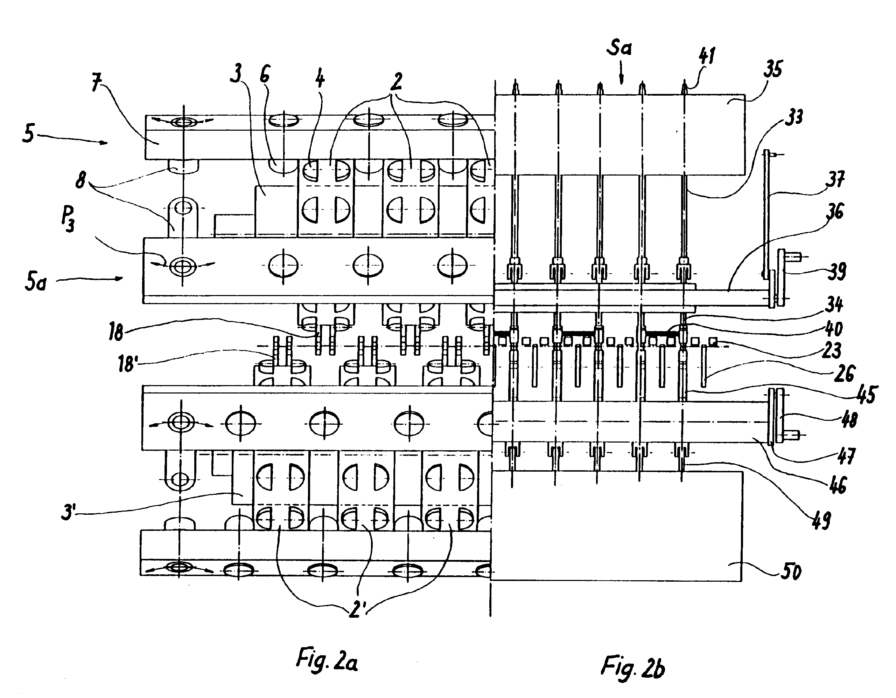

In Fig. 1 sowie den dazugehörigen Ansichten nach den Fig. 2a und 2b ist ein Ausführungsbeisplel einer Schweißmaschine gemäß der Erfindung dargestellt, die es ermöglicht, in einer ersten Station S aus einer Schar von Einzeldrähten D durch entsprechendes Biegen und paarweises Verschweißen von jeweils zwei Drähten D₁, D₂ ein Drahtband B herzustellen und in einer weiteren Station Sa mehrere benachbarte Bänder B, B' zu einem fertigen Drahtgitter G zu verschweißen.

Von einer nicht dargestellten Vorratstrommel wird der Draht D₁ in Richtung des Pfeiles P₁ über eine Richteinrichtung 1 straff gespannt tangential einer oberen, eine Einheit bildenden Biege- und Schweißtrommel 2 zugeführt, die auf einer in Richtung des Pfeiles P₁ antreibbaren Welle 3 sitzt. Die Biege- und Schweißtrommel 2 ist an ihrem Umfang mit mehreren Biegedornen 4 versehen, von denen jeder von der Biege- und Schweißtrommel 2 elektrisch isoliert ist. Die Verteilung der Biegedorne 4, deren gegenseitiger Abstand sowie Form und Abmessungen sind an die Form des herzustellenden Gitters G angepaßt. Wie in Fig. 2a beim gezeigten Ausführungsbeispiel dargestellt ist, besteht jeder Biegedorn 4 aus zwei elektrisch voneinander isolierten Halbzylindern.

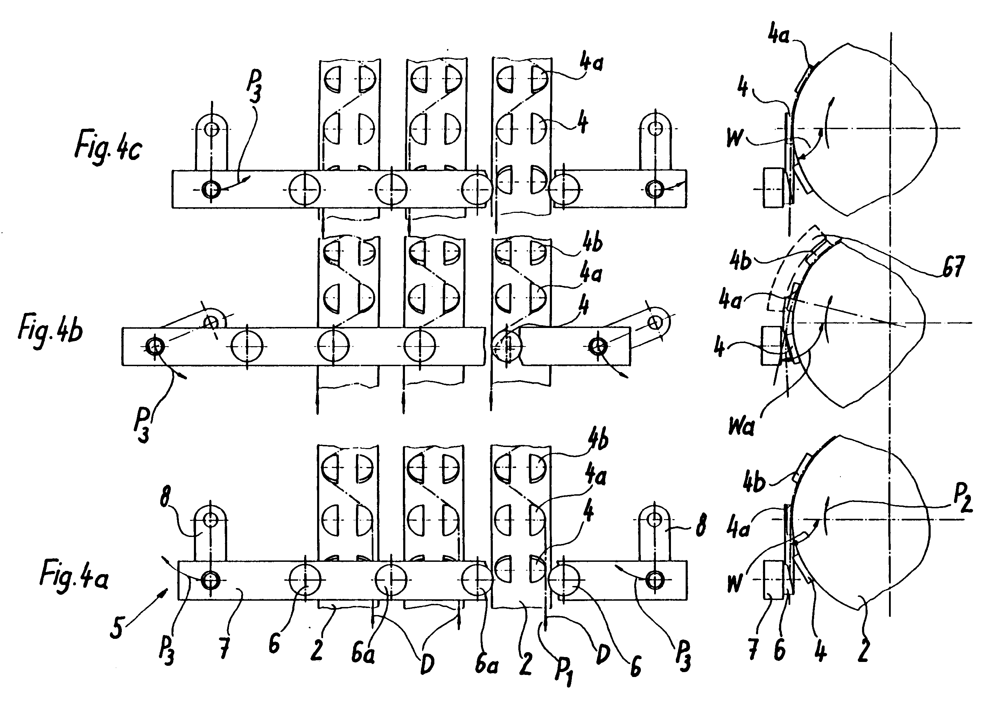

Mit Hilfe einer Auflegevorrichtung 5, die im wesentlichen einen mit zumindest zwei Biegebolzen 6 versehenen Schwingbalken 7 aufweist, wird, wie in den Fig. 4a - 4c gezeigt ist, der Draht D₁ um jeweils eine Hälfte des Biegedornes 4 formschlüssig herum gelegt, dadurch entsprechend der gewünschten Form des Drahtbandes B wellenförmig gebogen und dadurch formschlüssig mit der Biege- und Schweißtrommel 2 verbunden. Eine zusätzliche, der Übersicht halber nur schematisch angedeutete Führungskulisse 66 sowie nicht dargestellte, am Schwingbalken 7 befestigte Führungsstifte gewährleisten, daß der Draht D₁ beim Auflegen auf die Biege- und Schweißtrommel 2, wie in den Fig. 4a - 4c angedeutet, zunächst unter einem Einlaufwinkel W gleich dem tangentialen Auftreffwinkel einläuft (Fig. 4a), zum Biegen um den Biegebolzen 6 in eine Lage mit einem Einlaufwinkel Wa größer als der tangentiale Auftreffwinkel (Fig. 4b) gebracht und anschließend in eine Lage mit dem Einlaufwinkel W (Fig. 4c) zurückgeführt und in dieser Lage um den Biegedorn 4 gelegt wird. Beim Weitertransport durch die Biege- und Schweißtrommel 2 wird der Draht D₁ zusätzlich mittels eines in Fig. 4b schematisch angedeuteten Niederhalters 67 derart geführt, daß er von den Biegedornen 4 nicht abrutschen kann. Die für das Auflegen erforderliche Bewegung des Schwingbalkens 7 wird durch zwei entsprechend dem Doppelpfeil P₃ schwenkbare, aus Schwingbalken 7 angelenkte Schwinghebel 8 bewirkt.

Ein weiterer Draht D₂ wird mittels einer weiteren, versetzt angeordneten Auflegevorrichtung 5a derart auf die Biege- und Schweißtrommel 2 aufgelegt, daß der Draht D₂ jeweils um die andere Hälfte des Biegedornes 4 gebogen wird, wobei ein wellenförmig gebogener Draht D₂ entsteht, der um genau eine halbe Wellenlänge gegenüber dem Draht D₁ verschoben ist. Durch diese Anordnung ergeben sich Kreuzungspunkte K der beiden wellenförmig gebogenen Drähte D₁, D₂, die zwischen den in Umfangsrichtung aufeinanderfolgenden Biegedornen 4 liegen. Zwischen aufeinanderfolgenden Biegedornen 4, 4a ist jeweils eine Unterelektrode 9 elektrisch isoliert auf der Biege- und Schweißtrommel 2 angeordnet. Durch kontinuierliche Drehung der Biege- und Schweißtrommel 2 in Richtung des Pfeiles P₂ gelangt der auf der Unterelektrode 9 aufliegende Kreuzungspunkt K der beiden Drähte D₁, D₂ unter eine in einem Elektrodenhalter 10 angeordnete Oberelektrode 11. Der Elektrodenhalter 10 ist schwenkbar an einem Ende einer Elektrodenschwinge 12 gelagert, die mit ihrem anderen Ende koaxial zur Biege- und Schweißtrommel 2 gelagert und entsprechend dem Doppelpfeil P₄ schwenkbar ist. Hiebei erfolgt die Rückstellbewegung, wie durch einen zweiten linken Pfeil angedeutet, rascher als die Vorschubbewegung.

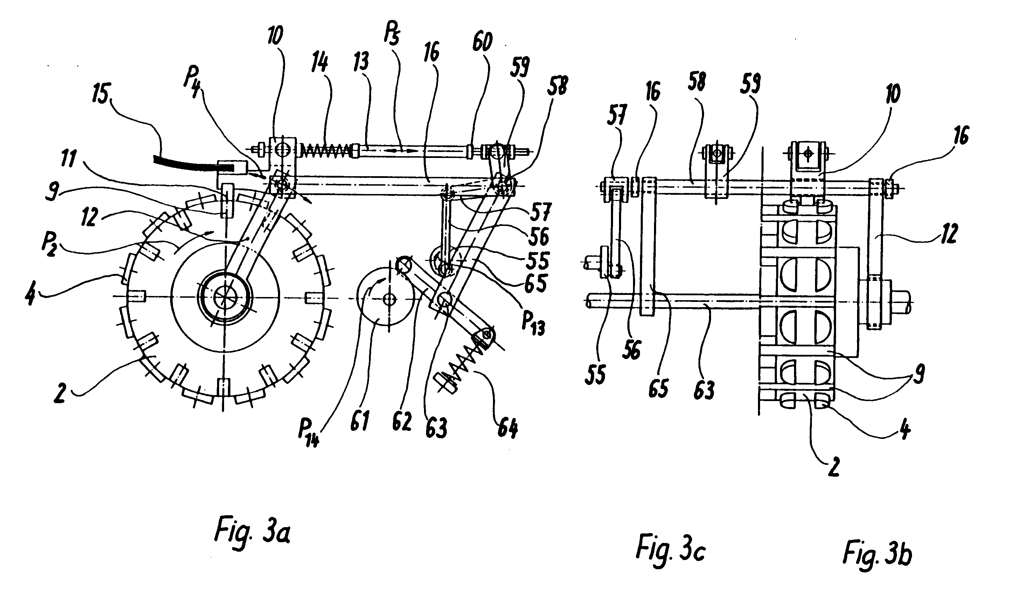

Mit Hilfe einer in Fig. 3a dargestellten, mit der Oberelektrode 11 verbundenen Antriebskoppel 16 wird die Oberelektrode 11 auf den Kreuzungspunkt K der Drähte D₁, D₂ aufgesetzt, durch Vorschub einer Druckstange 13 entsprechend dem Doppelpfeil P₅ über eine Elektrodenfeder 14 mit Schweißdruck beaufschlagt und von einem nicht dargestellten stationären Transformator über eine flexible Stromzuführung 15 mit Schweißstrom versorgt. Der elektrische Kontakt vom stationären Transformator zur Unterelektrode 9 kann beispielsweise über nicht dargestellte Schleifringe hergestellt werden. Vorteilhafter ist jedoch eine Doppelpunktschweißung, bei der zwei benachbarte Drahtkreuzungspunkte K einer Biege- und Schweißtrommel 2 gleichzeitig verschweißt werden. Hiebei sind jeweils zwei benachbarte Unterelektroden ein und derselben Biege- und Schweißtrommel 2 durch eine Strombrücke verbunden und zwei Oberelektroden 11 vorhanden, die in einfacher Weise jeweils über eine flexible Stromzuführung 15 von dem stationären Transformator mit Schweißtrom versorgt werden.

Die von der Koppel 16 geführte Oberelektrode 11 folgt genau einer durch den Umfang der Biege- und Schweißtrommel 2 vorgegebenen Schweißstrecke des Kreuzungspunktes K der Drähte D₁, D₂ und ermöglicht damit eine einwandfreie Verschweißung der Drähte D₁, D₂ zu einem Drahtband B. Nach Beendigung des Schweißvorganges hebt die Oberelektrode 11 durch die Koppel 16 gesteuert vom Schweißpunkt ab und kehrt in die Ausgangslage zurück.

Mit Hilfe eines mehrere Zähne 17 aufweisenden, in Richtung des Pfeiles P₆ drehbaren Sternrades 18 wird das Drahtband B von der Biege- und Schweißtrommel 2 abgezogen. Das Sternrad 18 sitzt auf einer sich über die gesamte Maschinenbreite erstreckenden, in Richtung des Pfeiles P₆ antreibbaren Welle 19.

Bedingt durch Schwankungen des Durchmessers und der Dehnwerte der einzelnen Drähte D₁, D₂ ergeben sich unterschiedliche Rückfederwinkel beim Biegen der Drähte D₁, D₂ um den Biegedorn 4, so daß als Folge davon die Amplituden der gewellten Drähte D₁, D₂ und damit die Breite des Bandes B unterschiedlich sein können. Zur Herstellung eines einwandfreien Drahtgitters G muß jedoch die Breite der Bänder B, B' konstant gehalten werden. Um dies zu erreichen, ist zwischen dem Sternrad 18 und der Biege- und Schweißtrommel 2 eine Dehnstrecke 20 vorgesehen, die im wesentlichen ein auf dem Band B aufliegendes Dehnrad 21 und eine das Dehnrad 21 entsprechend dem Doppelpfeil P₇ vorschiebende Zustelleinrichtung 22 aufweist. Mit Hilfe der Dehnstrecke 20 kann das Band B mehr oder weniger stark zwischen der Biege- und Schweißtrommel 2 und dem Sternrad 18 gespannt werden, wodurch das Band in seiner Breite verändert, vorzugsweise verkleinert wird. Die Steuerung der Zustelleinrichtung 22 kann beispielsweise über eine nicht dargestellte Einrichtung zur Messung der Breite des Bandes B erfolgen. Durch entsprechende Formgebung und Anstellung der gemäß Fig. 2a geteilt ausgeführten Zähne 17 des Sternrades 18 läßt sich auch eine Vergrößerung der Breite des Bandes B erreichen.

Mittels einer zur Biege- und Schweißtrommel 2 achsparallel angeordneten unteren Biege- und Schweißtrommel 2' und den dazugehörigen, oben beschriebenen Vorrichtungen, die dieselben, mit einem Apostroph versehenen Bezugszeichen aufweisen, wird ein zweites Band B' erzeugt und von einem weiteren Sternrad 18' von der Biege- und Schweißtrommel 2' abgezogen.

Jedes der beiden Bänder B, B' wird anschließend von einer Bandführung 23 seitlich geführt einer zugeordneten endlosen Transportkette 24 übergeben. Jede Transportkette 24 ist um ein Antriebsrad 26, das auf einer in Richtung des Pfeiles P₈ antreibbaren, sich über die gesamte Maschinenbreite erstreckende, allen Transportketten gemeinsame Antriebswelle 25 befestigt ist, und um ein auf einer Spannwelle 27 montiertes Spannrad 28 geführt. Die Transportkette 24 ist mit mehreren Mitnehmern 29 versehen, deren gegenseitiger Abstand entsprechend den Abständen der Kreuzungspunkte K im Band B einstellbar ist. Die Mitnehmer 29 greifen an den Kreuzungspunkten K an und führen das Band B kontinuierlich der Gitterschweißstation Sa zu. Die Transportketten 24 und die Mitnehmer 29 für benachbarte Bänder B, B' sind beim gezeigten Ausführungsbeispiel so angeordnet, daß sich die Wellenscheitel beider Bänder B, B' überlappen, um zwei Kreuzungspunkte Ka zu ergeben, in denen die Drähte der beiden Bänder B, B' in der Gitterschweißstation Sa miteinander verschweißt werden können.

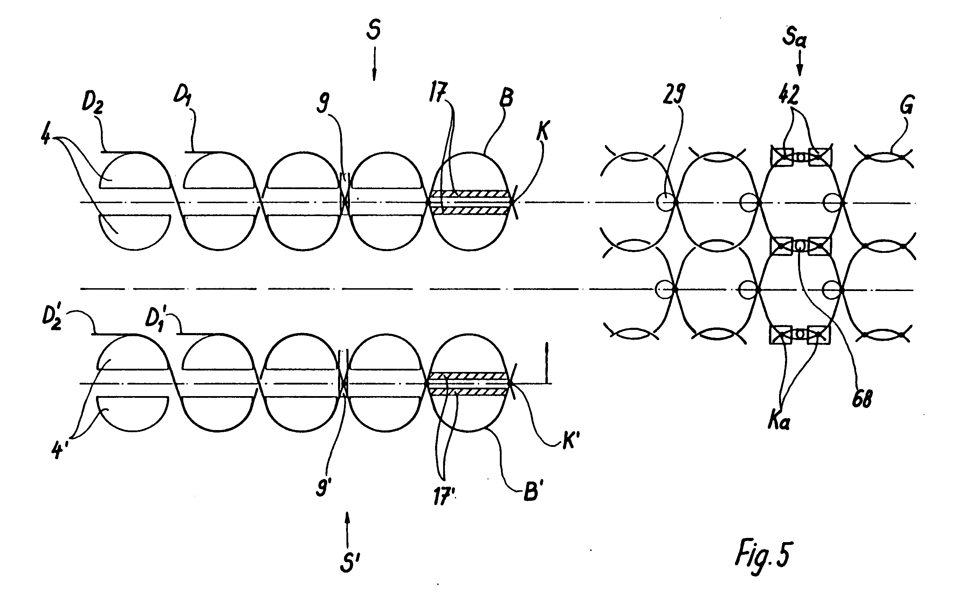

Die Gitterschweißstation Sa weist einen oberen Elektrodenhalter 30 auf, in den vorzugsweise zwei obere, durch einen in Fig. 5 dargestellten Zentrierstift 68 getrennte Elektroden 31 eingesetzt sind, um die beiden Drahtkreuzungspunkte Ka im Scheitelbereich benachbarter Bänder B, B' gleichzeitig verschweißen zu können. Der Zentrierstift 68 besteht aus verschleißfestem Isoliermaterial, beispielsweise Keramik, und hat die Aufgabe, die Lage der überlappenden Wellenscheitel der Bänder B, B' während des Schweißvorganges genau zu fixieren. Der Elektrodenhalter 30 ist durch eine Isolierung 32 elektrisch isoliert mit einem Elektrodenstößel verbunden, der aus einem Oberteil 33 und einem Unterteil 34 besteht. Der Oberteil 33 des Elektrodenstößels ist entsprechend dem Doppelpfeil P₉ vertikal verschiebbar in einem entsprechend dem Doppelpfeil P₁₀ ebenfalls vertikal verschiebbaren oberen Elektrodenhalter 35 geführt. Der Unterteil 34 des Elektrodenstößels ist gleitverschieblich in einem sich über die gesamte Maschinenbreite erstreckenden oberen Schwingbalken 36 geführt, der seinerseits mit einer Aufhängung 37 mit dem nicht dargestellten Maschinengestell verbunden ist. Durch einen Hebel 38 ist der Schwingbalken 36 drehbar mit einer entsprechend dem Doppelpfeil P₁₁ schwenkbaren oberen Schwinge 39 verbunden und ermöglicht damit, daß die obere Elektrode 31 während des Schweißvorganges der horizontalen Bewegung der durch die Transportkette 24 mitgenommenen Bänder B, B' folgt und anschließend in ihre Ausgangslage zurückkehrt. Da die Gitterschweißstation Sa vorzugsweise als Doppelpunktschweißstrecke aufgebaut ist, sind jeweils zwei benachbarte obere Elektrodenhalter 30 mit einer flexiblen Strombrücke 40 verbunden (Fig. 2b). Der Elektrodendruck ist mittels einer Einstelleinrichtung 41 einstellbar.

Vorzugsweise zwei untere Elektroden 42 sind in einen unteren Elektrodenhalter 43 eingesetzt, der elektrisch isoliert über eine Isolierschicht 44 mit einer Konsole 45 verbunden ist, die ihrerseits an einem sich über die gesamte Maschinenbreite erstreckenden unteren Schwingbalken 46 befestigt ist. Der untere Schwingbalken 46 ist über einen Hebel 47 drehbar mit einer entsprechend dem Doppelpfeil P₁₂ schwenkbaren unteren Schwinge 48 verbunden, so daß auch die untere Elektrode 42 der horizontalen Bewegung der zu verschweißenden Bänder B, B' folgen kann. Nach unten stützt sich der untere Schwingbalken 46 über mehrere, vorzugsweise der jeweiligen Konsole 45 gegenüberliegende Abstützungen 49 auf einem sich über die gesamte Maschinenbreite erstreckenden unteren Elektrodenbalken 50 ab, der in Abhängigkeit von der zu verschweißenden Drahtstärke einstellbar ist. Von einem stationären Transformator 51 wird über ein flexibles Stromband 52 der Schweißstrom dem unteren Elektrodenhalter 43 zugeführt. Über ein der Gitterschweißstation Sa nachgeschaltetes Umlenkrad 53 wird die Transportkette 24 um einen kleinen Winkel nach unten aus der Horizontalen abgelenkt, um das Abheben des fertigen Gitters G von der Transportkette 24 mit Hilfe eines Abhebers 54 zu erleichtern.

In der Gitterschweißstation Sa können außerdem zusätzliche, in Längsrichtung des Gitters verlaufende Spanndrähte mit den Drahtbandmaschen verschweißt werden. Das fertige Gitter G kann in einer weiteren Station auf einen Träger, beispielsweise auf ein aus senkrecht zueinander verlaufenden, miteinander verschweißten Längs- und Querdrähten bestehendes Traggitter, aufgeschweißt werden. Das fertige Gitter G wird anschließend aufgerollt oder in einer nachfolgenden Schneidestation auf die gewünschte Fertiglänge geschnitten.

Wie in Fig. 2a dargestellt ist, können auf gemeinsamen parallelen Wellen 3, 3' mehrere Paare von Biege- und Schweißtrommeln 2, 2' mit seitlichem Abstand angeordnet sein. Hiebei können jeweils die Unterelektroden 9 von zwei benachbarten Biege- und Schweißtrommeln 2 elektrisch miteinander zu einer Strombrücke verbunden werden, so daß für das gleichzeitige Herstellen von zwei Drahtbändern mittels Doppelpunktschweißung nur ein Transformator erforderlich ist.

In den Fig. 3a - 3c sind Antriebsvorrichtungen für die Bewegung der Oberelektrode 11 dargestellt. Der für das Verschweißen der Drähte D₁, D₂ erforderliche Elektrodenhub der Oberelektrode 11 wird von einem in Richtung des Pfeiles P₁₃ antreibbaren Exzenter 55 erzeugt, wobei der Hub über einen Exzenterstößel 56 und einen Exzenterhebel 57 auf eine mit dem Exzenterhebel 57 fest verbundene Koppelwelle 58 und von dieser über einen ebenfalls mit der Koppelwelle 58 fest verbundenen Elektrodenhebel 59 auf die Druckstange 13 übertragen wird. Zur Einstellung des Elektrodendruckes ist eine Einstellvorrichtung 60 vorgesehen.

Der Antrieb der Oberelektrode 11 erfolgt von einer in Richtung des Pfeiles P₁₄ antreibbaren Nockenscheibe 61, die einen zweiarmigen Rollenhebel 62 steuert, welcher mit einer sich über die gesamte Maschinenbreite erstreckenden, im nicht dargestellten Maschinengestell drehbar gelagerten Zentralwelle 63 fest verbunden und an einem Ende mit einer Rückstellfeder 64 versehen ist. Durch die Nockenscheibe 61 gesteuert, führt eine mit der Zentralwelle 63 fest verbundene Antriebsschwinge 65 eine Schwenkbewegung entsprechend dem Doppelpfeil P₄ aus und überträgt diese Bewegung über die schwenkbar gelagerte Koppelwelle 58 und die mit der Koppelwelle 58 schwenkbar verbundene Koppel 16 auf den Elektrodenhalter 10.

In den Fig. 4a - 4c ist die zeitliche Reihenfolge des Auflegens der Drähte D₁, D₂ auf die Biegedorne 4, 4a, 4b mit den entsprechenden Arbeitspositionen des Schwingbalkens 7 dargestellt. Die gegenseitigen Abstände der verschiedenen Biege- und Schweißtrommeln 2 auf der gemeinsamen Welle 3, die gegenseitigen Abstände der benachbarten Biegebolzen 6, 6a auf dem Schwingbalken 7 und die Auslenkung der Schwinghebel 8 entsprechend dem Doppelpfeil P₃ sind derart gewählt, daß mit Hilfe des zwischen zwei benachbarten Biege- und Schweißtrommeln 2 einer Welle 3 angeordneten Biegebolzens 6a die Drähte abwechselnd auf benachbarten Biege- und Schweißtrommeln gebogen werden können.

In Fig. 5 ist schematisch eine Ausführungsform der Herstellung des Gitters G dargestellt, wobei aus Gründen der besseren Übersicht der Herstellungsvorgang des unteren Bandes B' versetzt gezeichnet wurde.

Die in der Schweißvorrichtung S um die Biegedorne 4 bzw. 4' der Schweißtrommeln herum gelegten, einander überkreuzenden Drähte D₁, D₂ bzw. D₁', D₂' werden im Kreuzungspunkt mittels der Elektroden, von denen die Unterelektrode 9 bzw. 9' gezeigt ist, verschweißt und mittels des in die Drahtbandmaschen eingreifenden Sternrades 17 bzw. 17' abgezogen. Die benachbarten Drahtbänder B, B' werden sodann in der zweiten Schweißvorrichtung Sa in ihrem Scheitelbereich zur Überlappung gebracht, durch Mitnehmer 29 der nicht gezeigten Transportkette 24 vorwärts transportiert und im Scheitelbereich mit Hilfe von oberen und unteren Elektrodenpaaren an zwei Punkten verchweißt. In Fig. 5 sind lediglich die unteren Elektroden 42 gezeigt, die in Vorschubrichtung mit Abstand hintereinander liegen und elektrisch miteinander verbunden sind. Zwischen den Elektroden ist an der Schweißvorrichtung ein in den Scheitelbereich eingreifender Zentrierstift 68 vorgesehen. Die Erfindung ist jedoch nicht auf zwei Schweißpunkte pro Scheitelbereich beschränkt, es könnte z.B. auch nur ein Schweißpunkt vorgesehen werden, z.B. wenn die Bänder einander im Scheitelbereich lediglich berühren.

Zur Steuerung der Auflegevorrichtung 5 des Steuerrades 18, der Dehnstrecke 20, der Transportkette 24, der Antriebsvorrichtungen 3, 55, 61, der Schweißvorrichtungen für das Band- und das Gitterschweißen sowie zur Abstimmung der Bewegungsabläufe mehrerer Biege- und Schweißtrommeln 2, 2' für die Herstellung eines Gitters G aus mehreren Bändern B, B' ist eine nicht dargestellte Steuereinrichtung vorgesehen.

## Patentansprüche

1. Verfahren zum Herstellen von Drahtgittern, insbesondere Ziergittern für Zäune u.dgl., bei dem Drähte nach einem Richt- und Spannvorgang kontinuierlich mit vorbestimmter Amplitude um eine fiktive Längsachse hin und her sowie übereinander gebogen und an ihren Kreuzungspunkten miteinander zu einem Drahtband verschweißt werden, worauf zwei oder mehr auf diese Weise gebildete benachbarte Drahtbänder im Bereich der geformten Drahtscheitel zur Überlappung oder Berührung gebracht und in diesem Bereich miteinander verschweißt werden, dadurch gekennzeichnet, daß zunächst jeweils nur zwei Drähte, unmittelbar nachdem sie verformt und übereinander gebogen worden sind, formschlüssig gehalten und zum Drahtband verschweißt werden, und daß nach dem Verschweißen der Drahtbänder das fertige Drahtgitter aufgerollt wird.

2. Verfahren nach Anspruch 1, dadurch gekennzeichnet, daß die Maschen jedes aus zwei miteinander verschweißten Drähten gebildeten Drahtbandes vor dem Verschweißen mit einem benachbarten Drahtband in Produktionsrichtung gestreckt oder gestaucht werden.

3. Verfahren nach Anspruch 1 oder 2, dadurch gekennzeichnet, daß beim Verschweißen der Drahtbänder zugleich in Längsrichtung der Drahtbänder verlaufende Spanndrähte mit den Drahtbandmaschen verschweißt werden.

4. Verfahren nach einem der Ansprüche 1 bis 3, dadurch gekennzeichnet, daß das fertige Drahtgitter vor dem Aufrollen auf einen Träger aufgeschweißt wird.

5. Maschine zur Durchführung des Verfahrens nach einem der Ansprüche 1 bis 4, mit einer Vorrichtung zum Richten und Spannen der von einem Drahtvorrat abgezogenen Drähte, einer quer zur Produktionsrichtung hin- und herbewegbaren Vorrichtung zum Übereinanderbiegen der Drähte um Biegedorne einer umlaufenden Biegevorrichtung, einer dieser zugeordneten Vorrichtung zum Verschweißen der Drähte, die aus einer im wesentlichen zylindrischen Schweißtrommel als Unterelektrode und einer außerhalb derselben angeordneten Oberelektrode besteht, sowie zugeordneten Antriebs- und Steuervorrichtungen, dadurch gekennzeichnet, daß die Biegevorrichtung als Teil der Schweißtrommel ausgebildet ist, die kontinuierlich umlaufend antreibbar ist, daß zumindest ein Paar von Biege- und Schweißtrommeln (2, 2') vorgesehen ist, die achsparallel übereinander sowie in Achsrichtung gegeneinander versetzt angeordnet sind und jeweils an ihrem Umfang mehrere, aus zwei gegeneinander elektrisch isolierten Hälften gebildete Biegedorne (4, 4a) tragen, die in Umfangsrichtung gegenseitigen Abstand haben und zwischen denen Kreuzungsbereiche für jeweils zwei Drähte liegen, die von der zugeordneten, eine Führungskulisse (66) aufweisenden Vorrichtung (5, 5a) zum Übereinanderbiegen der Drähte formschlüssig um die Biegedorne herum legbar und an diesen mittels eines Niederhalters (67) in Anlage haltbar sind, daß jede Biege- und Schweißtrommel (2, 2') im Kreuzungsbereich (K, K') der Drähte jeweils zwischen benachbarten Biegedornen (4, 4a) als Unterelektrode (9, 9') ausgebildet ist und die zugeordnete Oberelektrode (11, 11') in den Kreuzungsbereich (K, K') zwischen die benachbarten Biegedorne (4, 4a) bewegbar ist, daß im Abzugsbereich jeder Biege- und Schweißtrommel (2, 2') eine in die Maschen des verschweißten Drahtbandes eingreifende Abziehvorrichtung (18, 18') und zwischen dieser und der Biege- und Schweißtrommel eine zustellbare Vorrichtung (20, 20') zum Formen des Drahtbandes angeordnet ist, und daß der Abziehvorrichtung (18, 18') eine Vorrichtung (23, 24), mit welcher die benachbarten Drahtbänder im Scheitel zur Überlappung oder Berührung gebracht werden, und eine Vorrichtung (Sa) zum Verschweißen der Drahtbänder im Scheitelbereich derselben zu einem Drahtgitter nachgeschaltet sind.

6. Maschine nach Anspruch 5, dadurch gekennzeichnet, daß jeder Biege- und Schweißtrommel (2, 2') zwei Vorrichtungen (5, 5a) zum Auflegen der Drähte auf die Trommel und zum Biegen der Drähte um die aufeinanderfolgenden Biegedorne (4) zugeordnet sind, wobei diese Vorrichtungen je einen im wesentlichen in Achsrichtung der Trommel hin- und herbewegbaren, die Drähte mittels Bolzen (6) führenden Schwingbalken (7) sowie die Führungskulisse (66) aufweisen, die ortsfest ist und mit welcher jeder Draht beim Biegevorgang in Anlage am Schwingbalkenbolzen (6) gehalten ist.

7. Maschine nach Anspruch 5 oder 6, dadurch gekennzeichnet, daß die Oberelektrode (11, 11') von einem Elektrodenhalter (10, 10') getragen ist, der über eine flexible Stromzuführung (15, 15') mit einem stationären Transformator verbunden und am Ende einer Elektrodenschwinge (12, 12') schwenkbar gelagert ist, die mit ihrem anderen Ende koaxial zur Biege- und Schweißtrommel schwenkbar gelagert und mittels einer Antriebsvorrichtung (16) in eine die Oberelektrode mit der Unterelektrode in Eingriff versetzende Stellung bewegbar, über eine vorbestimmte Schweißstrecke der Trommel mitbewegbar und sodann zurückstellbar ist, wobei der Elektrodenhalter über eine zugeordnete Andrückvorrichtung (13, 14) mit Schweißdruck beaufschlagbar ist.

8. Maschine nach einem der Ansprüche 5 bis 7, dadurch gekennzeichnet, daß mehrere Paare von zueinander versetzten Biege- und Schweißtrommeln (2, 2') nebeneinander auf parallelen Antriebswellen (3, 3') angeordnet sind, wobei vorzugsweise die Unterelektroden (9, 9') benachbarter Biege- und Schweißtrommeln (2, 2') zur Durchführung einer Doppelpunktschweißung paarweise zu einer Strombrücke elektrisch verbunden sind.

9. Maschine nach einem der Ansprüche 5 bis 8, dadurch gekennzeichnet, daß die Vorrichtung (20) zum Formen des Drahtbandes eine mittels einer Zustelleinrichtung (22) an das Drahtband andrückbare Formungsrolle (21) aufweist.

10. Maschine nach einem der Ansprüche 5 bis 8, dadurch gekennzeichnet, daß die Abziehvorrichtung jeder Biege- und Schweißtrommel (2, 2') durch am Umfang eines rotierenden Trägers (18) vorgesehene, an den Kreuzungspunkten des Drahtbandes angreifende Mitnehmer (17) gebildet ist, wobei der Träger vorzugsweise geteilt ausgebildet ist und die Mitnehmer durch zum Stauchen des Drahtbandes gegeneinander verstellbare Zähne gebildet sind.

11. Maschine nach einem der Ansprüche 5 bis 10, dadurch gekennzeichnet, daß die zum Verschweißen der Drahtbänder bestimmte Schweißvorrichtung (Sa) mit Transportvorrichtungen (24) für die Drahtbänder über eine vorbestimmte Schweißstrecke mitbewegbar und zur Durchführung einer Doppelpunktschweißung ausgebildet ist, wobei vorzugsweise zum gleichzeitigen Verschweißen von zwei Kreuzungspunkten (Ka) in jedem Scheitelbereich zu beiden Seiten der Schweißebene zwei elektrisch miteinander verbundene Elektroden (31, 42) vorgesehen sind, zwischen denen ein in den Scheitelbereich eingreifender Zentrierstift (68) angeordnet ist.

## Claims

1. Method for the manufacture of wire meshes, in particular ornamental meshes for fences and the like, in which wires after a straightening and tensioning operation are continuously bent with a predetermined amplitude about an imaginary longitudinal axis back and forth as well as over each other and welded together at their points of intersection into a wire strip, whereupon two or more adjacent wire strips formed in this way are overlapped or brought into contact in the region of the shaped wire peaks and welded together in this region, characterised in that at first in each case only two wires, immediately after they have been shaped and bent over each other, are held in form-locking relationship and welded into the wire strip, and in that after welding the wire strips, the finished wire mesh is rolled up.

2. Method according to claim 1, characterised in that the loops of each wire strip formed from two wires welded together are stretched or compressed in the direction of production before welding to an adjacent wire strip.

3. Method according to claim 1 or 2, characterised in that during welding of the wire strips at the same time tensioning wires extending in the longitudinal direction of the wire strips are welded to the wire strip loops.

4. Method according to any of claims 1 to 3, characterised in that the finished wire mesh before rolling up is welded onto a support.

5. Machine for carrying out the method according to any of claims 1 to 4, with a device for straightening and tensioning the wires taken off a wire stock, a device which can be reciprocated transversely to the direction of production for bending the wires over each other around bending mandrels of a rotating bending device, a device associated with the latter for welding the wires, which consists of an essentially cylindrical welding drum as a lower electrode and an upper electrode arranged outside thereof, as well as associated drive and control means, characterised in that the bending device is constructed as part of the welding drum which can be driven continuously in rotation, in that at least one pair of bending and welding drums (2, 2') is provided, which are arranged with parallel axes one above the other and also offset from each other in the axial direction and in each case carry at their periphery several bending mandrels (4, 4a) which are formed from two halves electrically insulated from each other and which are mutually spaced apart in the circumferential direction and between which are located regions of intersection in each case for two wires which can be laid in form-locking relationship around the bending mandrels by the associated device (5, 5a) for bending the wires over each other, which comprises a slotted link guide (66), and held in contact with the mandrels by means of a hold-down device (67), in that each bending and welding drum (2, 2') is constructed as a lower electrode (9, 9') in the region of intersection (K, K') of the wires in each case between adjacent bending mandrels (4, 4a) and the associated upper electrode (11, 11') can be moved into the region of intersection (K, K') between the adjacent bending mandrels (4, 4a), in that in the take-off region of each bending and welding drum (2, 2') is arranged a take-off device (18, 18') which engages in the loops of the welded wire strip and, between this take-off device and the bending and welding drum, an adjustable device (20, 20') for shaping the wire strip, and in that behind the take-off device (18, 18') are mounted a device (23, 24) with which the adjacent wire strips are overlapped or brought into contact at the peak, and a device (Sa) for welding the wire strips in the peak region thereof into a wire mesh.

6. Machine according to claim 5, characterised in that associated with each bending and welding drum (2, 2') are two devices (5, 5a) for laying the wires on the drum and for bending the wires around the successive bending mandrels (4), wherein these devices each comprise a swing bar (7) which can be reciprocated essentially in the axial direction of the drum and which guides the wires by means of pins (6), as well as the slotted link guide (66) which is stationary and with which each wire is held in contact with the swing bar pin (6) during the bending operation.

7. Machine according to claim 5 or 6, characterised in that the upper electrode (11, 11') is carried by an electrode holder (10, 10') which is connected by a flexible lead-in wire (15, 15') to a stationary transformer and mounted pivotably at the end of an electrode link (12, 12') which is mounted pivotably by its other end coaxially with the bending and welding drum and movable by means of a drive mechanism (16) into a position engaging the upper electrode with the lower electrode, and can be moved with the drum over a predetermined welding zone of the drum and then returned, wherein the electrode holder can be subjected to welding pressure by an associated pressing device (13, 14).

8. Machine according to any of claims 5 to 7, characterised in that several pairs of bending and welding drums (2, 2') offset from each other are arranged adjacent to each other on parallel drive shafts (3, 3'), wherein preferably the lower electrodes (9, 9') of adjacent bending and welding drums (2, 2') are electrically connected in pairs to form a current bridge for carrying out double spot welding.

9. Machine according to any of claims 5 to 8, characterised in that the device (20) for shaping the wire strip comprises a shaping roller (21) which can be pressed against the wire strip by means of a feed mechanism (22).

10. Machine according to any of claims 5 to 8, characterised in that the take-off device of each bending and welding drum (2, 2') is formed by drivers (17) provided on the circumference of a rotating support (18) and engaging the points of intersection of the wire strip, wherein the support is preferably split and the drivers are formed by teeth displaceable relative to each other for compressing the wire strip.

11. Machine according to any of claims 5 to 10, characterised in that the welding device (Sa) designed for welding the wire strips travels with transport devices (24) for the wire strips over a predetermined welding zone and is constructed for carrying out double spot welding, wherein preferably for simultaneously welding two points of intersection (Ka) in each peak region on both sides of the welding plane there are provided two electrodes (31, 42) electrically connected to each other, between which is arranged a centring pin (68) engaging in the peak region.

## Revendications

1. Procédé pour la fabrication de grillages métalliques, notamment de grillages décoratifs pour clôtures et analogues, dans lequel des fils, après une opération de dressage et de tension, sont plies en continu avec une amplitude prédéterminée, en un mouvement de va-et-vient et les uns par dessus les autres, autour d'un axe longitudinal fictif et sont soudés ensemble en leurs points de croisement en formant une bande de fils métalliques, dans lequel deux ou davantage de bandes de fils métalliques contiguës, formées de cette manière sont amenées en recouvrement ou en contact dans la zone de crête des fils formés et sont soudés ensemble dans cette zone, caractérisé en ce que, dans un premier temps, deux fils seulement, aussitôt après avoir été formés et pliés l'un par dessus l'autre, sont maintenus en forme et soudés en une bande de fils métalliques, et en ce qu'après le soudage des bandes de fils, le grillage métallique fini est enroulé.

2. Procédé selon la revendication 1, caractérisé en ce que les mailles de chaque bande de fils métalliques formée à partir de deux fils soudés ensemble sont étirés ou refoulés dans le sens de fabrication avant le soudage avec une bande de fils métalliques contigüe.

3. Procédé selon la revendication 1 ou 2, caractérisé en ce que, lors du soudage des bandes de fils métalliques, des fils de tension courant dans le sens longitudinal des bandes de fils métalliques sont soudés en même temps avec les mailles des bandes de fils métalliques.

4. Procédé selon l'une des revendications 1 à 3, caractérisé en ce que, avant l'enroulement, le grillage métallique fini est soudé sur un support.

5. Machine pour la mise en oeuvre du procédé selon l'une des revendications 1 à 4, comportant un dispositif pour le dressage et la tension des fils extraits d'un stockage de fils, un dispositif déplaçable en va et vient perpendiculairement au sens de fabrication en vue du pliage des fils les uns par dessus les autres autour de mandrins de pliage d'un appareil à plier rotatif, un dispositif faisant partie dudit appareil pour le soudage des fils, qui est constitué par une électrode inférieure dans le tambour de soudage essentiellement cylindrique et par une électrode supérieure située en dehors de ce dispositif, ainsi que des dispositifs d'entraînement et de commande correspondants, caractérisée en ce que l'appareil à plier est agencé en'tant que partie du tambour de soudage,lequel peut être continûment entraîné en rotation, qu'il est prévu au moins une paire de tambours de pliage et de soudage (2, 2') qui sont placés l'un au-dessus de l'autre parallèlement à l'axe et sont décalés l'un par rapport à l'autre dans le sens axial et comportent chacun sur sa périphérie plusieurs mandrins de pliage (4, 4a) formés de deux moitiés isolées électriquement l'une par rapport à l'autre avec un écartement relatif dans le sens circonférentiel et entre lesquelles se trouvent des zones de croisement pour deux fils chaque fois, lesquels peuvent être disposés en l'état autour des mandrins de pliage à partir du dispositif (5, 5a) adjoint comportant un coulisseau de guidage (66) pour le pliage des fils les uns par dessus les autres et être maintenus en appui sur les mandrins à l'aide d'une presse-matériel (67), que chaque tambour de pliage et de soudage (2, 2') est constitué dans chaque cas sous forme d'électrode inférieure (9, 9') entre les mandrins de pliage contigus (4, 4a) dans la zone de croisement (K, K') des fils et que l'électrode supérieure correspondante (11, 11') est déplaçable dans la zone de croisement (K, K') entre les mandrins de pliage contigus (4, 4a), que dans la zone de dégagement de chaque tambour de pliage et de soudage (2, 2') sont prévus un dispositif de tirage (18, 18') s'engrenant dans les mailles de la bande de fils métalliques soudée ainsi qu'un dispositif de positionnement (20, 20') entre le dispositif de tirage et le tambour de pliage et de soudage pour le formage de la bande de fils métalliques et qu'un dispositif (23, 24) par lequel les bandes de fils métalliques contiguës sont amenées en contact ou en recouvrement à leur sommet et un dispositif (Sa) pour le soudage des bandes de fils en un grillage métallique dans la zone de crête desdites bandes sont intercalés à la suite du dispositif de tirage (18, 18').

6. Machine selon la revendication 5, caractérisée en ce que deux dispositifs (5, 5a) pour le chargement des fils sur le tambour et pour le pliage des fils autour des mandrins de pliage successifs ((4) sont affectés à chaque tambour de pliage et de soudage (2, 2'), ces dispositifs comportant chacun une poutre oscillante se déplaçant en un mouvement de va et vient, essentiellement dans le sens axial du tambour et guidant les fils au moyen de goujons (6), ainsi qu'un coulisseau de guidage (66) qui est fixe et grâce auquel chaque fil est maintenu en appui sur le goujon de la poutre oscillante (6) au cours de l'opération de pliage.

7. Machine selon la revendication 5 ou 6, caractérisée en ce que l'électrode supérieure (11, 11') est montée dans un porte·électrode (10, 10') qui est relié à un transformateur fixe par l'intermédiaire d'une amenée de courant flexible (15, 15') monté de manière à pivoter à l'extrémité d'un bras d'électrode pivotant (12, 12'), lequel est monté en position pivotante et coaxialement au tambour de pliage et de soudage à son autre extrémité, est déplaçable à l'aide d'un dispositif d'entraînement (16) dans une position mettant l'électrode supérieure en prise avec l'électrode inférieure et entraînable sur une distance de soudage prédéterminée et peut être ensuite ramené à la position initiale, une pression de soudage pouvant s'exercer sur le porte-électrode par l'intermédiaire d'un dispositif presseur correspondant (13, 14).

8. Machine selon l'une des revendications 5 à 7, caractérisée en ce que plusieurs paires de tambours de pliage et de soudage (2, 2') décalés les uns par rapport aux autres sont disposés côte à côte sur des axes d'entraînement parallèles (3, 3'), les électrodes inférieures (9, 9') des tambours de pliage et de soudage contigus (2, 2') étant de préférence connectées électriquement par paires à un pont de contact pour l'exécution d'un soudage en deux points.

9. Machine selon l'une des revendications 5 à 8, caractérisée en ce que le dispositif (20) pour la formation de la bande de fils métalliques comporte un galet de formage (21) capable d'exercer une pression sur la bande de fils métalliques au moyen d'un dispositif de positionnement (22).

10. Machine selon l'une des revendications 5 à 8, caractérisée en ce que le dispositif de tirage de chaque tambour de pliage et de soudage (2, 2') est constitué par un entraîneur (17) attaquant la bande de fils métalliques aux points de croisement, disposé sur le pourtour d'un support rotatif (18), le support étant de préférence divise et les entraîneurs étant constitués par des dents ajustables les unes par rapport aux autres en vue du refoulement de la bande de fils métalliques.

11. Machine selon l'une des revendications 5 à 10, caractérisée en ce que le dispositif de soudage (Sa) pour le soudage des bandes de fils métalliques peut se déplacer simultanément sur une distance de soudage prédéterminée avec les dispositifs de transport (24) pour les bandes de fils métalliques et est conçu pour l'exécution d'une soudure en deux points, deux électrodes (31, 42) connectées électriquement, entre lesquelles se trouve un goujon de centrage s'engrenant dans la zone de crête, étant de préférence prévues pour le soudage simultané de deux points de croisement (Ka) dans chaque zone de crête de part et d'autre du plan de soudage.
